# EUROPEAN PATENT SPECIFICATION

(11) **EP 0 565 339 B1**
(45) Date of publication and mention of the grant of the patent: **24.01.1996**
(21) Application number: 93302688.2
(22) Date of filing: 06.04.1993
(51) Int. Cl.: B60C 9/22

(54) **A motorcycle tyre**
Motorradreifen
Bandage pneumatique pour moto

(30) Priority: 06.04.1992 JP 114172/92
(43) Date of publication of application: 13.10.1993
(73) Proprietor: SUMITOMO RUBBER INDUSTRIES LIMITED, Kobe-shi Hyogo-ken (JP)
(72) Inventor: Kawai, Yoshiyuki, Hyogo-ken (JP)
(74) Representative: Stewart, Charles Geoffrey

(56) References cited:
- DE-A- 3 535 064
- FR-A- 2 351 809
- GB-A- 2 015 937
- GB-A- 2 121 736
- US-A- 4 773 462
- PATENT ABSTRACTS OF JAPAN vol. 15, no. 333 (M-1150)23 August 1991 & JP-A-31 28 703 (SUMITOMO RUBBER INDUSTRIES LTD.) 31 May 1991

## Description

The present invention relates to a pneumatic tyre for motorcycles and more particularly to such a tyre having a tread reinforcing belt capable of improving the high speed durability and steering stability of the tyre.

Recent development in the motorcycle art has resulted in a motorcycle having a speed potential of over 300 km/h. In such a high performance motorcycle, accordingly, the tyres are required to have excellent high speed durability and steering stability.

In a conventional motorcycle tyre in which a sheet of nylon cord fabric is wound as a belt around the carcass, the number of belt plies has been increased in order to provide sufficient reinforcement for the tread portion.

In such a case, however, the tyre weight inevitably increases.

Further, the belt effect is liable to be smaller in the tread shoulder region than in the tread crown region. As a result, the tyre is liable to expand in the tread shoulder regions during high speed running, and heat generation increases. Therefore, high speed durability is not improved by such a belt.

Furthermore, ground contact and road grip are liable to be lost because the rigidity of the tread crown region is increased excessively, and as a result, steering stability is lost.

A motorcycle tyre according to the preamble of claim 1 is known, for example from US-A-4773462. FR-A-2351809 discloses a tyre for a motor vehicle including a breaker consisting of two layers of metallic cords radially inside at least one strip of nylon cords arranged substantially parallel with the tyre circumferential direction. The nylon cord density at the lateral edges of the strip is higher than in the central region.

It is therefore, an object of the present invention to provide a motorcycle tyre, in which the high speed durability is improved by decreasing tyre expansion due to centrifugal force during high speed running and thereby reducing heat generation in the tread portion, and further the steering stability is improved by improving the ground contact.

According to one aspect of the present invention, a motorcycle tyre comprises a tread portion with a pair of edges, a pair of axially spaced bead portions each with a bead core therein, a pair of sidewalls extending between the tread edges and the bead portions, a carcass having at least one carcass ply of organic fibre cords extending between the bead portions and turned up around the bead cores, said organic fibre cords being arranged radially at an angle of 60 to 90 degrees with respect to the tyre equator, a belt comprising a cord having a tensile elastic modulus of not less than 600kgf/mm² disposed radially outside the carcass and inside the tread portion, said tread portion extending in the axial direction and curved so that the maximum cross-sectional width of the tyre lies between said pair of tread edges, characterised by said belt consisting of a single belt ply made of at least one belt cord wound spirally substantially parallel to the tyre equator defining a multiplicity of windings, said single belt ply comprising a central part and a pair of shoulder parts one located to either side of the central part, the axial width of the central part being 0.5 to 0.7 times said maximum cross-sectional width of the tyre, and each said shoulder part having a first cord quantity, and said central part having a second cord quantity being 0.6 to 0.8 times the first cord quantity, where the cord quantity is defined as the total of the deniers of the windings per unit belt width, said at least one belt cord in said central part made of two or three strands twisted together, each strand comprising 840 to 1890 denier organic fibres, and the cord count in the central part is 24 to 36 per 5cm belt ply width.

Accordingly, as the belt ply is made of an organic fibre cord having a tensile elastic modulus of not less than 600 kgf/mm², the strength of the belt is increased in comparison with conventional belt plies made of nylon or polyester cord.

As the belt cord is wound spirally substantially parallel to the tyre equator, tyre expansion during high speed running is prevented.

The bending rigidity of the tread is decreased in the central part, since the cord quantity is smaller in the central part. Therefore, the ground contact is improved, and the cornering power decreased, and accordingly steering stability during straight running is improved.

In the shoulder parts, the compressive fatigue resistance is increased to further reduce the tyre expansion, whereby heat generation from the tread portion decreases, and high speed durability is improved.

Further, the camber stiffness is increased, and cornering performance is improved.

If in the central part the cord quantity or density is less than 60%, the rigidity of the shoulder parts is relatively increased too much relative to the central part, and steering stability during cornering is deteriorated. If the central part cord quantity is more than 80%, then the above-mentioned improvements are not achieved.

An embodiment of the present invention will now be described in detail in conjunction with the accompanying drawings.
Fig.1 is a cross sectional view of a motorcycle tyre according to the present invention; and

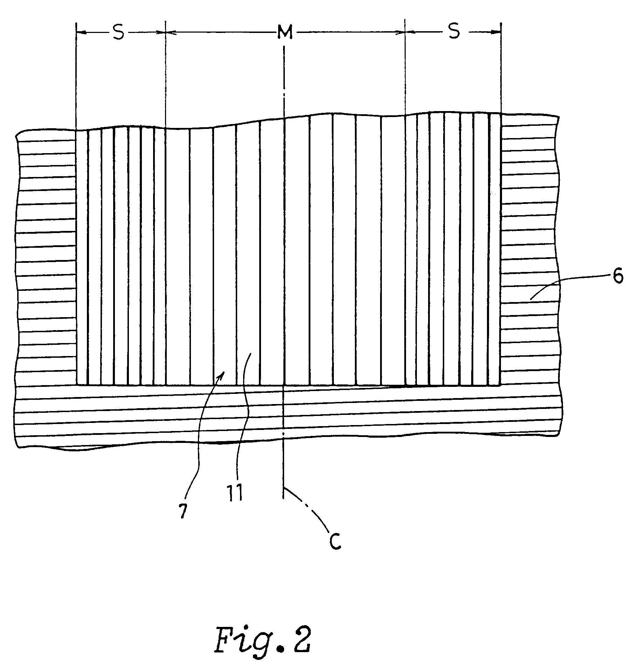

Fig.2 is a developed plan view showing an arrangement of the carcass cords and belt cords.

In the figures, the motorcycle tyre 1 of the present invention is a radial tyre comprising a tread portion 5 with a pair of edges E, a pair of axially spaced bead portions 3 each with a bead core 2 therein, a pair of sidewalls 4 extending between the tread edges and the bead portions, a carcass 6 extending between the bead portions 3 through the sidewalls 4 and the tread portion 5 and turned up around the bead cores 2 in the bead portions 3, and a belt 7 disposed radially outside the carcass 6 and inside the tread portion 5.

The tread portion 5 is provided across its whole width with a profile having substantially a single radius of curvature which is relatively small, for example when compared to the passenger car tyres. The tread portion 5 extends in the axial direction so that the maximum cross sectional width of the tyre lies between the tread edges E.

The carcass 6 in this embodiment comprises only one ply of radially arranged organic fibre cords.

The carcass cords are arranged at an angle of 60 to 90 degrees, in this embodiment 90 degrees, with respect to the tyre equator C so as to provide a radial ply carcass structure or a semiradial ply carcass structure.

For the carcass cord in this embodiment, a 1500d/2 polyester fibre cord, in which two strands of 1500 denier fibres are twisted together is used. Rayon fibre cords and nylon fibre cords may be used also.

The belt 7 in this embodiment is composed of only one belt ply 11. The belt ply 11 is made of at least one cord wound spirally around the carcass so that the windings thereof lie substantially parallel to the tyre equator C.

For the belt cord, steel cords or high modulus organic fibre cords, e.g. aromatic polyamide, having a tensile elastic modulus of not less than 600 kgf/mm², are used.

The belt ply 11 comprises three parts: a central part M and a pair of shoulder parts S located one on each side of the central part M. The central part M has a smaller quantity or cord density compared to the shoulder parts S.

The cord density in the central part M is set in the range of 0.6 to 0.8 times that in the shoulder parts S.

Here, the above-mentioned central part M is defined as being between a pair of points P, one located on either side of the tyre equator C at an axial distance L from the tyre equator C, of 0.25 to 0.35 times the axial distance TW between the tread edges E.

Each shoulder part S is defined as the part between each point P and the adjacent edge of the ply.

Further, the cord quantity is defined as the total of the deniers of the cords or windings per unit belt ply width.

That is, when the total denier number (d) and the cord count (N) are constant in each part, the cord quantity (d x N) is defined as the total denier number (d) of one cord multiplied by the cord count (N) per unit belt ply width.

The smaller cord quantity in the central part M can be achieved by, for example,
(a) using an identical denier cord in both the central part and shoulder parts and varying the cord counts therebetween,
(b) using a small denier cord in the central part M and a large denier cord in the shoulder parts S, while keeping the cord counts constant therebetween, or
(c) varying both the cord counts and cord deniers between the central part and shoulder parts.

In this embodiment, method (a) is employed.

In each of the central part M and the shoulder parts S, the same aromatic polyamide fibre cord is used for the belt cord. This cord is made of two or three strands of 840 to 1890 denier to provide a 840d/2 - 1890d/2 structure or a 840d/3 - 1890d/3 structure.

Between the central part and each shoulder part, the belt cord is continued. In other words, the belt ply 11 in this embodiment is made of a single cord wound spirally and continuously from one edge to the other edge.

Thus the cord count in the central part M is set in the range of 0.6 to 0.8 times that in the shoulder parts S.

In the central part M, the cord count has a constant value of 24 to 36 per 5cm belt ply width, and the cord quantity is 4320 to 204120 deniers per 5cm belt ply width.

In the shoulder parts S, the cord count has a constant value of 40 to 45 per 5cm belt ply width, and the cord quantity is 67200 to 255150 deniers per 5cm belt ply width.

Therefore, the bending rigidity of the central part M of the belt 7 is smaller, and the ground contact during straight running is improved. The cornering power at a small slip angle is decreased, and stability during straight running is improved.

In the shoulder parts S, on the other hand, camber thrust is increased when the tyre is under a large camber angle of 30 to 45 degrees.

As another embodiment of the present invention, it is possible to dispose an additional belt ply (not shown) radially outside the above-mentioned belt ply 11. This additional outer belt ply is formed by spirally winding at least one belt cord in the same manner as the inner belt ply 11 with the exception of the winding direction which is the reverse to that of the inner belt ply 11.

The ply width and structure and material of the cord are the same as the inner belt ply 11.

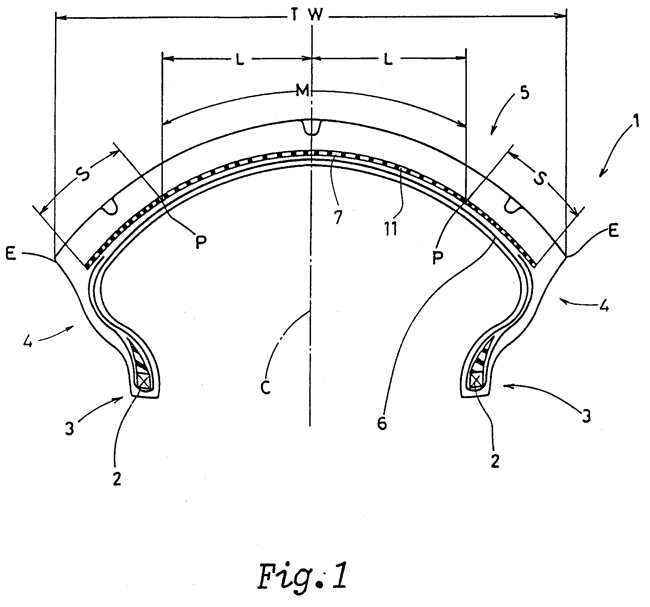

Test tyres of size 160/60R17 having the tyre structure shown in Fig.1 and specifications given in Table 1 were prepared and tested for the following performance factors:

### (1) High speed durability

Using a drum tester with a smooth surface, the running speed was increased every 24 hours in steps of 10 km/h from an initial speed of 80 km/h, and the running distance to break was measured. The inner pressure was 2.9 kgf/cm² and the tyre load was 260 kgf. The results are indicated in Table 1 by an index based on the Reference tyre 1 as 100, wherein the larger the index, the better the high speed durability, and over 120 is acceptable.

### (2) Tyre strength

The strength of each tyre was measured by the test method according to Japanese Industrial Standard JIS-K6301. The results are indicated in Table 1 by an index based on Reference tyre 1 being set at 100, wherein the larger the index, the better the strength, and over 115 is acceptable.

### (3) Straight running stability & Cornering stability

During running on a straight test course at a speed of 240 km/h and a 400 meter radius course at a speed of 180 km/h, stability was evaluated by a test driver. Each test tyre was mounted on the rear wheel, and a 120/60R17 tyre was mounted on the front wheel.

The results are indicated in Table 1 by an index based on that Reference tyre 1 is 100, wherein the larger the index, the better the stability.

As described above, in the motorcycle tyre according to the present invention, ground contact is improved in the central part and steering stability is improved. Further, the compressive fatigue resistance is increased in the shoulder parts, and the tyre expansion and heat generation are reduced, thereby high speed durability is improved.

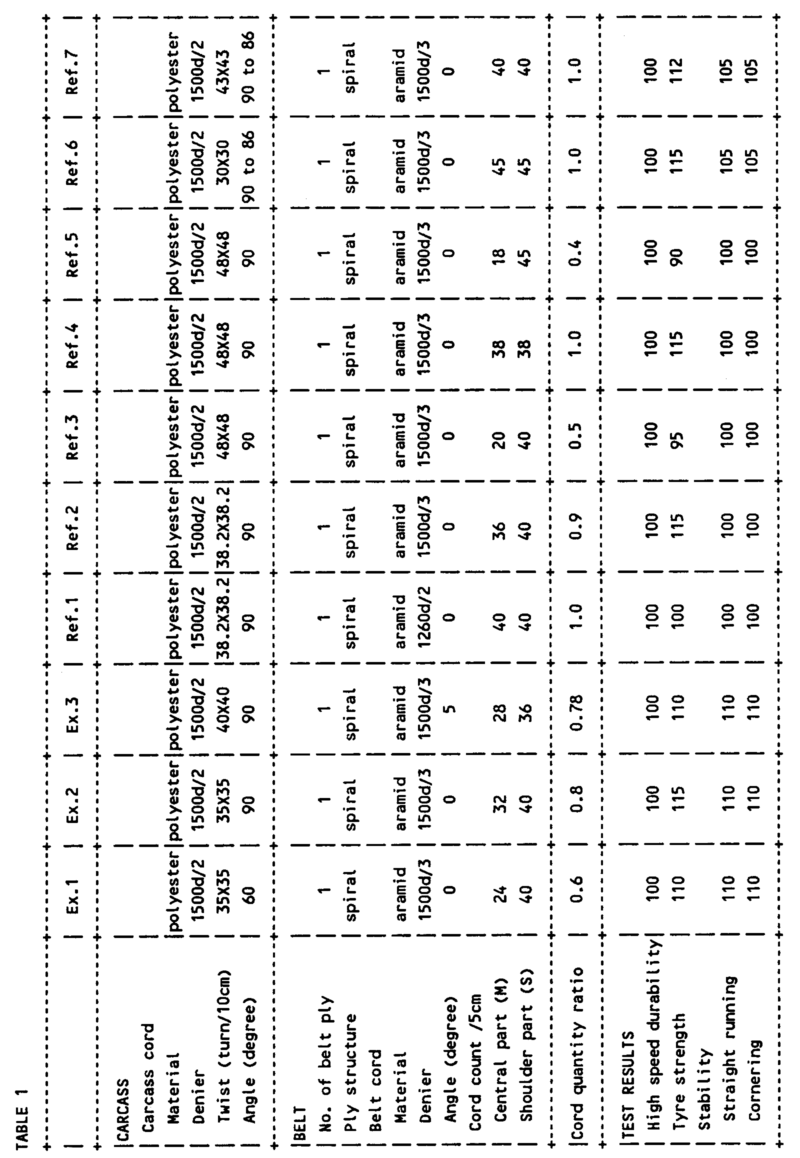

## Claims

1. A motorcycle tyre comprising a tread portion (5) with a pair of edges (E), a pair of axially spaced bead portions (3) each with a bead core (2) therein, a pair of sidewalls (4) extending between the tread edges (E) and the bead portions (3), a carcass (6) having at least one carcass ply of organic fibre cords extending between the bead portions (3) and turned up around the bead cores (2), said organic fibre cords being arranged radially at an angle of 60 to 90 degrees with respect to the tyre equator (C), a belt (7) comprising a cord having a tensile elastic modulus of not less than 600kgf/mm² disposed radially outside the carcass (6) and inside the tread portion (5), said tread portion (5) extending in the axial direction and curved so that the maximum cross-sectional width (TW) of the tyre lies between said pair of tread edges (E), characterised by said belt (7) consisting of a single belt ply (11) made of at least one belt cord wound spirally substantially parallel to the tyre equator (C) defining a multiplicity of windings, said single belt ply (11) comprising a central part (M) and a pair of shoulder parts (S) one located to either side of the central part (M), the axial width of the central part (M) being 0.5 to 0.7 times said maximum cross-sectional width (TW) of the tyre, and each said shoulder part (S) having a first cord quantity, and said central part (M) having a second cord quantity being 0.6 to 0.8 times the first cord quantity, there the cord quantity is defined as the total of the deniers of the windings per unit belt width, said at least one belt cord in said central part (M) made of two or three strands twisted together, each strand comprising 840 to 1890 denier organic fibres, and the cord count in the central part (M) is 24 to 36 per 5cm belt ply width.

2. A motorcycle tyre according to claim 1, characterised in that the material and denier of the belt cord in the central part (M) and the shoulder parts (S) are the same and the cord count is different in each part.

3. A motorcycle tyre according to claim 1 or 2, characterised in that said at least one belt cord is wound continuously from one edge of the belt ply (11) to the other.

4. A motorcycle tyre according to any of claims 1-3, characterised in that said at least one belt cord is a cord made of three strands of aromatic polyamide fibres of approximately 1500 deniers, and each carcass cord is made of two strands of polyester fibres of approximately 1500 deniers.

## Patentansprüche

1. Ein Motorradreifen mit einem Laufflächenabschnitt (5) mit einem Paar von Kanten (E), einem Paar von axial beabstandeten Wulstabschnitten (3), in denen jeweils ein Wulstkern (2) vorgesehen ist, einem Paar von Seitenwänden (4), die sich zwischen den Laufflächenkanten (E) und den Wulstabschnitten (3) erstrecken, einer Karkasse (6) mit wenigstens einer Karkassenlage aus organischen Faserkorden, die sich zwischen den Wulstabschnitten (3) erstreckt und um die Wulstkerne (2) umgeschlagen ist, wobei die organischen Faserkorde radial unter einem Winkel von 60 bis 90 Grad bezüglich des Reifenäquators (C) angeordnet sind, einem Gürtel (7), der einen Kord mit einem Zug-Elastizitätsmodul von nicht weniger als 600 kgf/mm² aufweist und radial außerhalb der Karkasse (6) und innerhalb des Laufflächenabschnitts (5) angeordnet ist, wobei sich der Laufflächenabschnitt (5) in axialer Richtung erstreckt und so gekrümmt ist, daß die maximale Querschnittsbreite (TW) des Reifens zwischen dem Paar von Laufflächenkanten (E) liegt,
dadurch **gekennzeichnet,**
daß der Gürtel (7) aus einer einzelnen Gürtellage (11) besteht, die aus wenigstens einem Gürtelkord hergestellt ist, der spiralförmig im wesentlichen parallel zum Reifenäquator (C) gewickelt ist, wodurch eine Vielzahl von Wicklungen definiert ist, wobei die einzelne Gürtellage (11) einen zentralen Teil (M) und ein Paar von Schulterteilen (S) umfaßt, von denen jeweils einer auf einer der beiden Seiten des zentralen Teils (M) angeordnet ist, die axiale Breite des zentralen Teils (M) das 0,5- bis 0,7-fache der maximalen Querschnittsbreite (TW) des Reifens beträgt, und jeder der Schulterteile (S) eine erste Kordquantität und der zentrale Teil (M) eine zweite Kordquantität aufweist, die das 0,6- bis 0,8-fache der ersten Kordquantität beträgt, wobei die Kordquantität als die Gesamtheit der Denier der Wicklungen pro Gürtelbreiten-Einheit definiert ist, daß der wenigstens eine Gürtelkord im zentralen Teil (M) aus zwei oder drei Fäden hergestellt ist, die miteinander verdreht sind, wobei jeder Faden organische Fasern von 840 bis 1890 Denier umfaßt, und daß die Kordzählung im zentralen Teil (M) 24 bis 36 pro 5 cm Gürtellagenbreite beträgt.

2. Ein Motorradreifen nach Anspruch 1,
dadurch **gekennzeichnet,**
daß das Material und das Denier des Gürtelkords im zentralen Teil (M) und den Schulterteilen (S) gleich sind und die Kordzählung in jedem Teil verschieden ist.

3. Ein Motorradreifen nach Anspruch 1 oder 2,
dadurch **gekennzeichnet,**
daß der wenigstens eine Gürtelkord kontinuierlich von der einen Kante der Gürtellage (11) zur anderen gewickelt ist.

4. Ein Motorradreifen nach einem der Ansprüche 1-3,
dadurch **gekennzeichnet,**
daß der wenigstens eine Gürtelkord ein Kord ist, der aus drei Fäden aus aromatischen Polyamidfasern von näherungsweise 1500 Denier hergestellt ist, und daß jeder Karkassenkord aus zwei Fäden aus Polyesterfasern von nährungsweise 1500 Denier hergestellt ist.

## Revendications

1. Pneumatique de motocyclette, comprenant une partie de bande de roulement (5) ayant deux bords (E), une paire de parties (3) de talon qui sont axialement espacées, chacune ayant une tringle (2) à l'intérieur, deux flancs (4) placés entre les bords (E) de la bande de roulement et les parties de talon (3), une carcasse (6) ayant au moins une nappe de carcasse formée de câblés de fibres organiques placés entre les parties de talon (3) et repliée autour des tringles (2), les câblés de fibres organiques étant placés radialement suivant un angle de 60 à 90° par rapport à l'équateur (C) du pneumatique, une ceinture (7) comprenant un câblé ayant un module élastique de traction qui n'est pas inférieur à 6.10⁹ Pa (600 kgf/mm²), disposé axialement à l'extérieur de la carcasse (6) et à l'intérieur de la partie (5) de bande de roulement, la partie (5) de bande de roulement étant placée dans la direction axiale et recourbée afin que la largeur maximale en coupe (TW) du pneumatique soit comprise entre les deux bords (E) de la bande de roulement, caractérisé en ce que la ceinture (7) est formée d'une seule nappe (11) de ceinture constituée d'au moins un câblé de ceinture enroulé en spirale en direction pratiquement parallèle à l'équateur (C) du pneumatique et formant plusieurs enroulements, la nappe unique (11) de ceinture comprenant une partie centrale (M) et deux parties (S) d'épaulement, placées chacune d'un côté de la partie centrale (M), la largeur axiale de la partie centrale (M) étant comprise entre 0,5 et 0,7 fois la largeur maximale (TW) en coupe du pneumatique, chaque partie d'épaulement (S) ayant une première quantité de câblés, la partie centrale (M) ayant une seconde quantité de câblés qui est comprise entre 0,6 et 0,8 fois la première quantité de câblés, la quantité de câblés étant définie comme étant la somme des deniers des enroulements par unité de largeur de ceinture, le câblé de ceinture au moins de la partie centrale (M) étant formé de deux ou trois brins retordus, chaque brin ayant des fibres organiques de denier compris entre 840 et 1 890, le nombre de câblés de la partie centrale (M) étant compris entre 24 et 36 par fraction de 5 cm de largeur de la nappe de ceinture.

2. Pneumatique de motocyclette selon la revendication 1, caractérisé en ce que la matière et le denier du câblé de ceinture sont les mêmes dans la partie centrale (M) et dans les parties d'épaulement (S), et les nombres de câblés sont différents dans les différentes parties.

3. Pneumatique de motocyclette selon la revendication 1 ou 2, caractérisé en ce que le câblé au moins de ceinture est enroulé de façon continue d'un bord de la nappe (11) de ceinture à l'autre.

4. Pneumatique de motocyclette selon l'une quelconque des revendications 1 à 3, caractérisé en ce que le câblé de ceinture au moins est un câblé formé de trois brins de fibres de polyamide aromatique ayant un denier d'environ 1 500, et chaque câblé de carcasse est formé de deux brins de fibres de polyester de denier approximativement égal à 1 500.
